**Europäisches Patentamt**

**European Patent Office**

**Office européen des brevets**

(19)

(11) Veröffentlichungsnummer: **0 036 031**
**B1**

(12) **EUROPÄISCHE PATENTSCHRIFT**

(45) Veröffentlichungstag der Patentschrift: **04.07.84**

(21) Anmeldenummer: **80101413.5**

(22) Anmeldetag: **18.03.80**

(51) Int. Cl.³: **B 01 D 46/10** // B01D39/16

(54) Verfahren zum Abscheiden von Öl oder ölartigen Substanzen aus Gasen wie Luft.

(43) Veröffentlichungstag der Anmeldung:
**23.09.81 Patentblatt 81/38**

(45) Bekanntmachung des Hinweises auf die Patenterteilung:
**04.07.84 Patentblatt 84/27**

(84) Benannte Vertragsstaaten:
**AT BE CH DE FR GB IT NL SE**

(56) Entgegenhaltungen:
DD - A - 85 551
DE - A - 1 482 474
DE - A - 2 123 379
DE - A - 2 127 708
DE - A - 2 221 068
DE - A - 2 232 178
DE - A - 2 717 329
DE - A - 2 753 988
DE - B - 1 032 224
DE - U - 1 819 296
DE - U - 1 959 924
DE - U - 7 512 028
GB - A - 2 017 774
US - A - 2 945 557
US - A - 3 018 845
US - A - 3 019 186
US - A - 3 768 236

(73) Patentinhaber: **Girmes-Werke AG**
**D-4155 Grefrath-Oedt 1 (DE)**

(72) Erfinder: **Kerres, Bruno, Dr. Dipl.-Ing.**
**Büschen 27**
**D-4054 Nettetal 1- Hinsbeck (DE)**

(74) Vertreter: **Gille, Christian, Dipl.-Ing. et al,**
**Redies, Redies, Türk & Gille, Patentanwälte**
**Brucknerstrasse 20**
**D-4000 Düsseldorf 13 (DE)**

Courier Press, Leamington Spa, England.

**Beschreibung**

Die Erfindung betrifft ein Verfahren zum Abscheiden von Öl oder ölartigen Substanzen aus Gasen wie Luft.

Es ist bisher mit einfachen technischen Mitteln nicht möglich, in Luft oder anderen Gasen mitgeführtes Öl oder ölartige Substanzen mit einem Tröpfchendurchmesser von etwa 1 bis 30 $\mu$m, vorzugsweise von unter 10 $\mu$m, auf mechanischem Wege wie durch Filtration oder Zentrifugieren abzuscheiden. Die Problematik leigt darin, daß die feinen Öltröpfchen trotz ihres höheren spezifischen Gewichtes sich in einer Art Schewbezusiand im Gas befinden, insbesondere wenn dasselbe strömt, und auch im ruhenden Zustand des Gases innerhalb technisch interessanter Zeiten nicht ausfallen und sich an einer Wand oder einem Boden niederschlagen. Will man aber den Ölgehalt von mit Ölen od. dgl. durchsetzter Luft senken und somit mit Öl verschmutzte Luft wirksam reinigen, müssen auch feine und feinste Öltröpfchen sicher und schnell aus der Luft entfernt werden können.

Der Erfindung liegt die Aufgabe zugrunde, einen einfachen Weg zu weisen, wie in Gasen wie Luft fein verteilte Öle oder ölartige Substanzen wirksam innerhalb von für die technische Anwendung interessanten Zeiten aus den Gasen abgeschieden und abgeführt, beispielsweise einer Wiederverwendung zugeführt werden können.

Diese Aufgabe wird bei einem Verfahren der eingangs genannten Gattung erfindungsgemäß dadurch gelöst, daß man das mit der abzuscheidenden Substanz beladene Gas durch ein poröses textiles Flächengebilde, das wenigstens teilweise aus oleophilen Fasern mit einem Einzeltiter unter 1 dtex besteht, hindurchleitet, die an den Fasern des Flächengebildes zurückgehaltenen Tropfen und Tröpfchen der Substanz sich dort sammeln und von dem Flächengebilde abtropfen läßt und schließlich auffängt, um die so gewonnene Masse der abgeschiedenen Substanz abzuführen und gegebenenfalls anderweitig zu verwenden. Auf diese Weise findet an dem textilen Flächengebilde ein Koaleszenz, d.h. Agglomeration, feiner und feinster Öltröpfchen oder Substanztröpfchen zu größeren Tropfen statt, die in den Gasen nicht mehr im Schwebezustand verbleiben bzw. selbst vom strömenden Gas nicht mehr getragen werden, sondern wegen des gegenüber dem Gas höheren spezifischen Gewichtes des Öles oder der ölartigen Substanz unter Schwerkrafteinfluß vom Flächengebilde abtropfen und sich dann in einem Auffangbecken oder dergleichen mit weiteren Tropfen vereinigen, so daß die abgeschiedenen Substanzen problemlos abzuführen sind.

Als superfeine oleophile Fasern, Fäden oder Filamente sind solche zu verstehen, deren Einzeltiter unter 1 dtex und vorzugsweise im Bereich von 0,05 dtex bis 0,5 dtex liegt.

Derartige Fäden, Filamente oder Fasern werden beispielsweise hergestellt, indem man unterschiedliche synthetische Polymere von beispielsweise Polyamid oder Polyäthylenterephthat gemeinsam in bestimmter Querschnittsverteilung oder mit einer Matrixverteilung im Querschnitt aus einer Spinndüse als geschmolzene Polymere zu Fäden mit einem über 1 dtex liegenden Einzeltiter ausspinnt. In dieser Form wird das Material zu einem textilen Flächengebilde verarbeitet. Anschließend erfolgt eine chemische Behandlung, beispielsweise mit Quellmitteln, die ein Aufbrechen des Faser- oder Fadenquerschnittes in viele Einzeltiter bewirkt.

Ein textiles Flächengebilde im Sinne der Erfindung ist beispielsweise ein Flachgewebe, ein homogenes poröses Faservlies, ein poröser Filz, ein Gewirke und dergleichen. Ein dreidimensionales textiles Flächengebilde im Sinne der Erfindung ist ein Flächengebilde, das wenigstens auf einer Seite eines flächigen Substrates wie eines Gewebes, Gewirkes, Filzes und dergleichen eine Faserschicht wie beispielsweise einen Faserflor, eine aus Fasern oder Fäden gebildete Polschicht oder dergleichen aufweist. Solche dreidimensionalen textilen Flächengebilde können als poröses Vlies geformt, als Polgewirke abgestrickt, geraschelt oder gewirkt oder auch als Polgewebe gewebt sein. Wichtig ist, daß das Flächengebilde ebenso wie einfache textile Flächengebilde eine gewisse Porösität aufweist, um den Gasenteil der zu reinigenden Gase durchzulassen und lediglich die aus den Gasen abzuschiedenden Öle oder ölhaltigen Substanzen anzuziehen und zurückzuhalten.

Die erfindungsgemäß zum Reinigen von Gasen wie Luft verwendeten textilen Flächengebilde haben in überraschender Weise im Gegensatz zu aus üblichen Fasern hergestellter Polware die Eigenschaft, beim Durchleiten von beispielsweise mit Öl verunreinigter Luft ohne großen Druckverlust die von der Luft mitgeführten Otröpfchen an den superfeinen Fasern zu sammeln und dadurch zurückzuhalten und dadurch am Flächengebilde die zunächst sehr feinen Öltröpfchen zu größeren Otropfen zu verbinden, welche nach Wachstum auf eine bestimmte Tropfengröße sich vom textilen Fasermaterial lösen und unter Schwerkrafteinfluß nach unten abtropfen, wo sie aufgefangen und abgeführt werden können. Die für ein wirksames Entfernen von Öl oder ölartigen Substanzen aus Gasen notwendige Koaleszenz feinster Öl- oder Substanztröpfchen zu größeren Tröpfchen oder Tropfen, die von selbst nach unten fallen, wird mit der erfindungsgemäß ausgebildeten und verwendeten Einrichtung also dadurch erreicht, daß die in den Gasen mahr oder weniger schwebend mitgeführten und nur schwer und langsam aus denselben ausfallenden feinsten Öltröpfchen von den superfeinen Fasern des beispielsweise dreidimensionalen textilen Flächengebildes zunächst angezogen und gehalten und, wenn sie zu größeren Tröpfchen oder Tropfen angewachsen sind, von dieser Faserschicht freigegeben werden und dann nach unten fallen. Die Faseroberfläche des sozusagen als "Filter" verwendeten textilen Flächengebildes wird somit selbsttätig immer wieder von Ölansammlungen und dergleichen befreit, so daß sich die Faserschicht auch selbsttätig reinigt und stets für die Koaleszenz neu herangeführter Öle oder ölartiger Substanzen bereit ist.

Vorzugsweise ist das textile Flächengebilde ein Einsatz in einem vom zu behandelnden Gas zu durchströmenden Gehäuse, der sich quer zur Strömungsrichtung durch das Gehäuse erstreckt und unter dem sich im Gehäuse ein Auffangbecken für abtropfendes Öl befindet. Somit kann es in ein Rohr- oder Kanalsystem eingebaut werden, das von den zu reinigenden Gasen durchströmt wird und beispielsweise zur Reinigung von Luft aus Betriebsräumen, in denen Öl- dämpfe anfallen, bestimmt ist. Das für die Abscheidung der Öle oder ölartigen Substanzen verwendete textile Flächengebilde ist im Aufbau einfach und kann auch als auswechselbarer Einsatz benutzt werden, so daß die Reinigung von Gasen erfindungsgemäß nicht nur wirkungsvoll, sondern auch preiswert durchzuführen ist.

In der Zeichnung ist ein Ausführungsbeispiel einer erfindungsgemäß arbietenden Einrichtung zum Abscheiden von Öl oder ölartigen Substanzen aus strömenden Gasen schematisch dargestellt, und zwar zeigt.

Fig. 1 einen Längsschnitt durch ein Rohrstück mit in dasselbe eingesetztem textilen Flächengebilde und

Fig. 2 einen stark vergrößerten und schematisierten Teilschnitt des textilen Flächengebildes.

In ein Rohr 10, das an beiden Enden Flansche 11 und 12 zum Anschließen an nicht dargestellte Teile einer Rohrleitung aufweist, ist ein scheibenförmiger Rahmen 13 mit gewisser Schrägneigung in eine entsprechende Nut 14 auswechselbar eingesetzt. Dieser Rahmen 13 enthält ein textiles Flächengebilde 1, das in Richtung eines Pfeiles 15 von ölhaltiger Luft durchströmt wird. Vor der Nut 14 ist im Boden des Rohres 10 eine schalenartige Vertiefung 16 mit einer Auslauföffnung 17 vorgesehen, in welche an der Vorderseite des textilen Flächengebildes 1 angewachsene Öltröpfchen herabfallen bzw. herabtropfen können. An den Auslaß 17 ist eine nicht dargestellte Abuhrleitung für abgeschiedenes Öl angeschlossen.

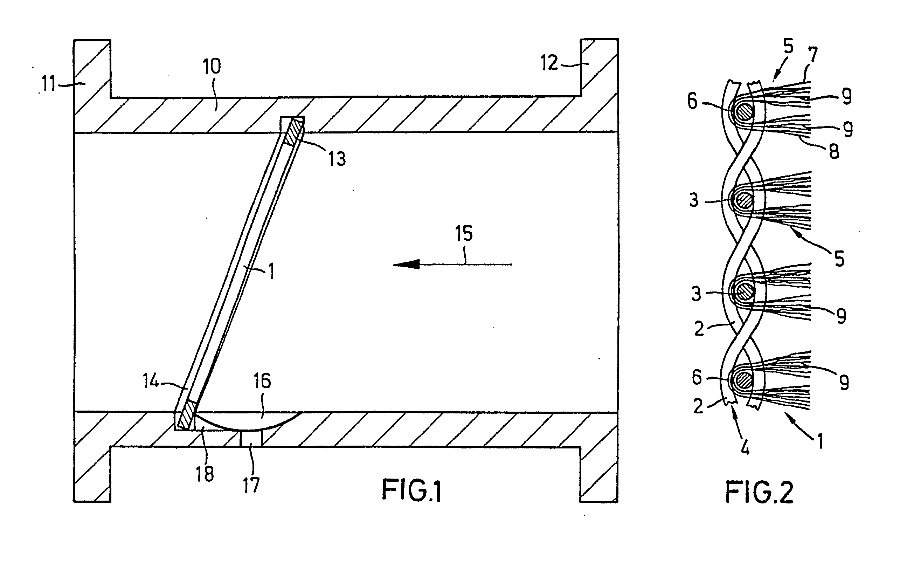

Einzelheiten des textilen Flächengebildes 1 sind in Fig. 2 dargestellt. Daraus ist ersichtlich, daß das textile Flächengebilde 1 dreidimensional ist und die Form eines aufgeschnittenen Plüsches mit einem aus einander überkreuzenden Fäden 2 und 3 gebildeten Substrat 4 und mit darin eingebundenen Polnoppen 5 aufweist.

Jede Polnoppe besteht aus einem beim dargestellten Ausführungsbeispiel V-förmig eingebundenen Fader 6, dessen Enden 7 und 8 hochstehen und der durch eine chemische Behandlung mit beispielsweise einem Quellmittel zu feinen bzw. feinsten Einzelfasern aufgebrochen ist. Die Einzelfasern 9 sind superfein mit einem Einzeltiter unter 1 dtex, der vorzugsweise im Bereich von 0,05 dtex bis 0,5 dtex liegt, und haben oleophile Eigenschaften, d.h. sie üben auf Öl oder ölartige Substanzen, auch wenn dieselben in feinster Verteilung von einem strömenden Gas mitgeführt werden, eine gewisse Affinität aus, so daß sich auch kleinste Tröpfchen an die Einzelfasern 9 anlegen, bis sie durch Anlagerung weiterer kleinster Otröpfchen zu größeren Tröpfchen oder Tropfen angewachsen sind, die im strömenden Gas nicht mehr in der Schwebe bleiben, sondern aufgrund ihres gegenüber dem Gas höheren spezifischen Gewichtes sich von den Einzelfasern 9 lösen und in die Vertiefung 16 herabtropfen. Auch die den Rücken bildenden Fäden 2 und 3 können aus dem beschriebenen superfeinen Fadenmaterial bestehen.

Bei der in Fig. 1 dargestellten Anordnung weisen im Falle der Verwendung eines dreidimensionalen textilen Flächengebildes der in Fig. 2 dargestellten Art die Polnoppen 5 zweckmäßig in Richtung zur anströmenden Luft, so daß sich die feinsten und feinen Öltröpfchen an den Spitzen der Polnoppen anlagern und von dort auch nach Anwachsen zu größeren Tröpfchen oder Tropfen herabfallen. Wenn aber die das Substrat 4 bildenden Fäden 2 und 3 ebenfalls aus dem beschriebenen superfeinen Fadenmaterial bestehen, kann auch die Rückseite der Waren von der zu reinigenden Luft angeströmt werden.

Es wurde gefunden, daß ein aus aufgeschnittenem Plüsch bestehendes dreidimensionales textiles Flächengebilde der in Fig. 2 dargestellten Art, das in Pol und Rücken aus feinen oleophilen Fasern besteht und beispielsweise in Querrichtung 12 Noppen pro Zentimeter und in Längsrichtung 6 Noppen pro Zentimeter bei einer Noppenlänge über Grund von etwa 6 mm und einer gesamten Noppenlänge von etwa 12 mm aufweist, geeignet ist, um wirksam auch feinste bzw. kleinste Öltröpfchen oder Tröpfchen aus ölartigen Substanzen aus strömenden Gasen wie Luft abzuscheiden, indem die feinsten Tröpfchen an der Pol- und Rückseite des dreidimensionalen Flächengebildes zurückgehalten werden und dort zu größeren Tröpfchen oder Tropfen koaleszieren, die dann an der Oberfläche des Flächengebildes herabfließen oder von der Oberfläche abtropfen. Die von ölartigen Verunreinigungen zu befreienden Gase werden also von einer Seite durch das dreidimensionale Flächengebilde hindurchgeleitet, um sie zu "filtrieren" und dabei von Ölrückständen zu reinigen. Dabei sit es aber nicht zwingend notwenidg, daß die abzuscheidenden Ölrückstände nur an der zuerst angeströmten Seite des textilen Flächengebildes zurückgehalten werden. Vielmehr können sich auch an der Rückseite des Flächengebildes 1 abzuscheidende Substanzen niederschlagen und dann auf dieser Rückseite herablaufen. Damit bei der Ausführungsform gemäß Fig. 1 die an der Rückseite des Flächengebildes 1 möglicherweise gesammelten Ölbestandteile ebenfalls in die Vertiefung 16 gelangen, ist die Nut 14 über wenigstens einen schmalen Kanal 18 mit der Vertiefung 16 verbunden. Daher können in die Nut 14 gelaufene Substanzen wie Öl in die Vertiefung 16 abfließen.

Der Rahmen 13 kann aus Metall, Keramik und ähnlichem Material bestehen, während das textile Flächengebilde 1 zumindest teilweise aus den superfeinen Einzelfasern 9 besteht.

Eine Polware ist gegenüber einem zweidimensionalen Flachgewebe vorzuziehen, da sie gegenüber einem durchströmenden Gas einen geringeren Gegendruck wie ein einfaches Flachgewebe, das eine gleichwertige Koaleszenz der vom Gas mitgenommenen Ölbestandteile bewirkt, aufbaut.

## Patentansprüche

1. Verfahren zum Abscheiden zon Öl oder ölartigen Substanzen aus Gasen wie Luft, dadurch gekennzeichnet, daß man das mit der abzuscheidenden Substanz beladene Gas durch ein poröses textiles Flächengebilde (1), das wenigstens teilweise aus oleophilen Fasern mit einem Einzeltiter unter 1 dtex besteht, hindurchleitet, die an dem Flächengebilde zurückgehaltenen Tropfen und Tröpfchen der Substanz von dem Flächengebilde abtropfen läßt und auffängt.

2. Verfahren nach Anspruch 1, dadurch gekennzeichnet, daß als textiles Flächengebilde (1) ein Einsatz (13) in einem vom zu behandelnden Gas zu durchströmenden Gehäuse (10), der sich quer zur Strömungsrichtung (15) durch das Gehäuse erestreckt und unter dem sich im Gehäuse ein Auffangbecken (16) für abtropfendes Öl oder ölartige Substanz befindet, verwendet wird.

3. Verfahren nach Anspruch 1 oder 2, dadurch gekennzeichnet, daß oleophile Fasern (9) mit einem Titer von unter 1 dtex, vorzugsweise im Bereich von 0,05 bis 0,5 dtex, verwendet werden.

4. Verfahren nach einem der Ansprüche 1 bis 3, dadurch gekennzeichnet, daß als textiles Flächengebilde (1) ein Faservlies verwendet wird.

5. Verfahren nach einem der Ansprüche 1 bis 3, dadurch gekennzeichnet, daß als textiles Flächengebilde (1) ein gestricktes, gerascheltes oder gewirktes Polgewirke oder ein Polgewebe verwendet wird.

6. Verfahren nach Anspruch 5, dadurch gekennzeichnet, daß der Pol des Polgewirkes oder Polgewebes aus den superfeinen oleophilen Fasern (9) besteht.

7. Verfahren nach einem der Ansprüche 1 bis 3, dadurch gekennzeichnet, daß als textiles Flächengebilde (1) ein wenigstens einlagiges Flachgewebe oder Flachgewirke verwendet wird.

8. Verfahren nach einem der Ansprüche 1 bis 7, dadurch gekennzeichnet, daß wenigstens einzelne Fäden wie die Polfäden (5) des textilen Flächengebildes (1) mittels eines Quellmittels in viele oleophile feine Einzeltiter (9) aufgebrochen werden.

## Revendications

1. Procédé pour la séparation d'huile ou de substances huileuses de gaz tels que l'air, caractérisé en ce que le gaz chargé de la substance à séparer est passé à travers une surface textile poreuse (1) composée au moins partiellement de fibres oléophiles présentant un titre individuel de moins de 1 dtex, et que les gouttes et les gouttelettes de la substance retenues par cette surface sont égouttées de cette surface et recueillies.

2. Procédé suivant la revendication 1, caractérisé en ce que il est utilisé comme surface textile (1) un insert (13) disposé dans un carter (10) traversé par le gaz à traiter, le dit insert d'étendant dans le carter verticalement à la direction d'écoulement, et sous lequel est prévu un bac collecteur (16) pour l'huile ou les substances huileuses égouttées.

3. Procédé suivant l'une des revendications 1 ou 2, caractérisé en ce qu'il est utilisé des fibres oléophiles (9) ayant un titre de moins de 1 dtex, de préférence dans le domaine de 0,05 à 0,5 dtex.

4. Procédé suivant l'une des revendications 1 à 3, caractérisé en ce qu'il est utilisé comme surface textile (1) un voile.

5. Procédé suivant l'une des revendications 1 à 3, caractérisé en ce qu'il est utilisé comme surface textile (1) un tissu ou une texture à poils tricoté, à mailles Rachel ou tisse.

6. Procédé suivant la revendication 5, caractérisé en ce que les poils du tissu ou de la texture à poils consistent des fibres oléophiles superfines (9).

7. Procédé suivant l'une des revendications 1 à 3, caractérisé en ce qu'il est utilisé comme surface textile (1) un tissu plat ou une texture plate comprenant au moins une couche.

8. Procédé suivant l'une des revendications 1 à 7, caractérisé en ce qu'au moins certaines fibres individuelles telles que les poils (5) de la surface textile (1) sont franctionnées au moyen d'un agent gonflant en une multitude de titres oléophiles individuels fins (9).

## Claims

1. Process for the separation of oil or oily substances from gases like air, characterized in that the gas charged with the substance to be separated is passed through a porous textile surface (1) consisting at least partly of oleophilic fibres having an individual titer of less than 1 dtex, and that the substance drops and droplets are trickled down from the surface retaining them and that they are collected.

2. Process as defined in claim 1, characterized in that the as textile surface (1) is used an insert (13) provided in a housing (20) to be passed by the gas to be treated, said insert extending through said housing vertically to the flow direction, and below said insert being arranged a collecting pan (16) for dripping oil or oily substance.

3. Process as defined in either of claims 1 or 2, characterized in that there are used oleophilic fibers (9) having a titer of less than 1 dtex, preferably in the range of 0.05 to 0.5 dtex.

4. Process as defined in either of claims 1 to 3, characterized in that as textile surface (1) is used a fiber fleece.

5. Process as defined in either of claims 1 to 3, characterized in that as textile surface (1) is used a knitted, rascheled or weft pile warp or pile web.

6. Process as defined in claim 5, characterized in that the pile of the pile warp or pile web consists of the superfine oleophilic fibers (9).

7. Process as defined in either of claims 1 to 3, characterized in that as textile surface (1) is used an at least one layer comprising flat web or flat knit.

8. Process as defined in either of claims 1 to 7, characterized in that at least individual fibers such as the pile fibers (5) of the textile surface (1) are fractioned by means of a swelling agent into a plurality of oleophilic fine individual titers (9).

FIG.1

FIG.2

0 036 031